# EUROPEAN PATENT SPECIFICATION

(11) **EP 3 699 776 B1**
(45) Date of publication and mention of the grant of the patent: **05.05.2021**
(21) Application number: 19158225.3
(22) Date of filing: 20.02.2019
(51) Int. Cl.: G06F 16/638

(54) **COMMUNICATING SHUFFLED MEDIA CONTENT**
KOMMUNIKATION VON GEMISCHTEM MEDIENINHALT
COMMUNICATION DE CONTENU MULTIMÉDIA MÉLANGÉ

(43) Date of publication of application: 26.08.2020
(60) Divisional application: 21165801.8
(73) Proprietor: Spotify AB, 111 53 Stockholm (SE)
(72) Inventor: Curcio Lindström, Erik Johan, 111 53 Stockholm (SE); Sahlén, Emil, 111 53 Stockholm (SE); Erdtman, Sven Samuel, 111 53 Stockholm (SE)
(74) Representative: Ström & Gulliksson AB

(56) References cited:
- US-B2- 8 832 122
- US-B2- 9 537 913

## Description

### Field

The present disclosure relates to shuffling media content. In particular, it relates to creating and communicating a shuffled list of media content items in a particular order.

### Background

In modern media content environments which support playlists of media content items, such as songs, music, videos, or other types of media content, a user may wish to consume such content on a range of different devices. For example, a user may desire to start a media playback session at home on a laptop computer, continue that session on a smartphone on a commute from home to work, and further continue the session on a desktop computer at work. This requires each device to be able to access the media content in the playback session at different times.

In many cases, the user may want the content of the session to be shuffled, for example within an artist page or a playlist, to provide a play order of the media content items that is different from a suggested or stored order. It is then also required that the shuffled order is available at each device that is used for media playback at different times.

A challenge with current arrangements for playback is that shuffling tends to be performed randomly, such that the same shuffled order is not accurately recreated on different devices. To ensure correct ordering of content, a shuffled order of media content items may be determined and an ordered list of the content can be shared across the devices that wish to produce the media content for consumption. However, in some cases, such as with music playlists, the size of full playlist information can be large. This can result in storage issues at both a server and a client device, especially in the case of client devices that have limited on-board memory. Further, sending the ordered list of media content between the server and the client devices can involve large bandwidth requirements and transmission times.

Therefore, it is desired to provide a method for creating and sharing shuffled playlists of media content that can be stored and transmitted in a more efficient manner.

US 9537913 discloses a method and system for delivery of audio content for use on a wireless mobile device. A music service application that can be run on a wireless mobile device enables audio data to be progressively downloaded from a remote server and also enables locally stored data to be played.

The present disclosure attempts to mitigate at least some of the issues noted above by using a shuffle algorithm that produces the same order of content every time it uses the same seed. When devices have the algorithm installed, all they need to do is apply the correct seed to the algorithm, along with a list of the relevant content, in order to generate the content in the correct order. As such, only the seed and an indicator of the media content items in the playlist need be transmitted between devices, which reduces transmission time and bandwidth requirements. The seed and indicator can be transmitted in a single package. Further, the seed and indicator can be stored at a server for later retrieval by a client device, or at a client device itself, without impractical memory requirements.

In accordance with an aspect of the disclosure there is provided a method performed at a first computing device for communicating a defined order of a plurality of media content items for playback on a second computing device, as defined in claim 1. In accordance with another aspect of the disclosure there is provided a computer-readable medium as defined in claim 12.

### Brief Description of the Drawings

Exemplary embodiments of the disclosure shall now be described with reference to the drawings in which:
FIG. 1 illustrates an example of a system for providing media content.
FIG. 2 further illustrates an example of a system for providing media content.
FIG. 3 further illustrates an example of a system for providing media content.
FIG. 4 shows a method for communicating a defined order of a plurality of media content items, in accordance with an embodiment.
FIG. 5 shows a method for enabling playback of a plurality of media content items in a defined order.

Throughout the description and the drawings, like reference numerals refer to like parts.

### Specific Description

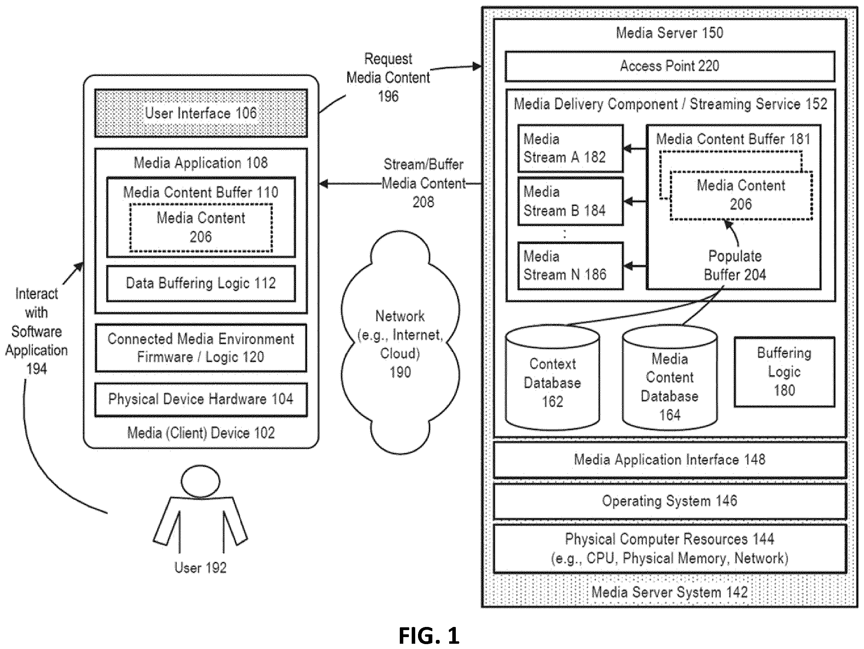

FIG. 1 illustrates an example of a system for providing media content, which is not claimed and is presented for illustration purposes. As illustrated in FIG. 1, in accordance with an embodiment, a media device 102, operating as a client device, can receive and play media content provided by a backend media server system 142 (media server), or by another system or peer device. In accordance with an embodiment, the client device can be, for example, a personal computer system, handheld entertainment device, tablet device, smartphone, television, audio speaker, in-car entertainment system, or other type of electronic or media device that is adapted or able to prepare a media content for presentation, control the presentation of media content, and/or play or otherwise present media content.

In accordance with an embodiment, each of the client device and the media server can include, respectively, one or more physical device or computer hardware resources 104, 144, such as one or more processors (CPU), physical memory, network components, or other types of hardware resources.

Although, for purposes of illustration, a single client device and media server are shown, in accordance with an embodiment a media server can support the simultaneous use of a plurality of client devices. Similarly, in accordance with an embodiment, a client device can access media content provided by a plurality of media servers, or switch between different media streams produced by one or more media servers.

In accordance with an embodiment, the client device can optionally include a user interface 106, which is adapted to display media options, for example as an array of media tiles, thumbnails, or other format, and to determine a user interaction or input. Selecting a particular media option, for example a particular media tile or thumbnail, can be used as a command by a user and/or the client device, to the media server, to download, stream or otherwise access a corresponding particular media content item or stream of media content.

In accordance with an embodiment, the client device can also include a media application 108, together with an in-memory client-side media content buffer 110, and a data buffering logic 112, which can be used to control the playback of media content received from the media server, for playing either at a requesting client device (i.e., controlling device) or at a controlled client device (i.e., controlled device), in the manner of a remote control. A connected media environment firmware/logic 120 enables the device to participate within a connected media environment.

In accordance with an embodiment, the data buffering logic, together with the media content buffer, enables a portion of media content items, or samples thereof, to be pre-buffered at a client device. For example, while media options are being prepared for display on a user interface, e.g., as media tiles or thumbnails, their related media content can be pre-buffered at the same time, and cached by one or more client devices in their media content buffers, for prompt and efficient playback when required.

In accordance with an embodiment, the media server system can include an operating system 146 or other processing environment which supports execution of a media server 150 that can be used, for example, to stream music, video, or other forms of media content to a client device, or to a controlled device.

In accordance with an embodiment, the media server can provide a subscription-based media streaming service, for which a client device or user can have an associated account and credentials, and which enable the user's client device to communicate with and receive content from the media server. A received media-access request from a client device can include information such as, for example, a network address, which identifies a destination client device to which the media server should stream or otherwise provide media content, in response to processing the media-access request.

For example, a user may own several client devices, such as a smartphone and an audio speaker, which can play media content received from a media server. In accordance with an embodiment, identifying information provided with a media-access request can include an identifier, such as an IP address, MAC address, or device name, which identifies that the media-access request is intended for use with a particular destination device. This allows a user, for example, to use their smartphone as a controlling client device, and their audio speaker as a controlled client device to which media content should be sent. The media server can then send the requested media and/or forward the media-access request to the audio speaker, even though the request originated at the user's smartphone.

In accordance with an embodiment, a media application interface 148 can receive requests from client devices, or from other systems, to retrieve media content from the media server. A context database 162 can store data associated with the presentation of media content by a client device, including, for example, a current position within a media stream that is being presented by the client device, or a playlist associated with the media stream, or one or more previously-indicated user playback preferences. The media server can transmit context information associated with a media stream to a client device that is presenting that stream, so that the context information can be used by the client device, and/or displayed to the user. The context database can be used to store a media device's current media state at the media server, and synchronize that state between devices, in a cloud-like manner. Alternatively, media state can be shared in a peer-to-peer manner, wherein each device is aware of its own current media state which is then synchronized with other devices as needed.

For example, in accordance with an embodiment, when the destination client device to which the media content is being streamed changes, from a controlling device to a controlled device, or from a first controlled device to a second controlled device, then the media server can transmit context information associated with an active media content to the newly-appointed destination device, for use by that device in playing the media content.

In accordance with an embodiment, a media content database 164 can include media content, for example music, songs, videos, movies, podcasts, or other media content, together with metadata describing that media content. The metadata can be used to enable users and client devices to search within repositories of media content, to locate particular media content items.

In accordance with an embodiment, a buffering logic 180 can be used to retrieve or otherwise access media content items, in response to requests from client devices or other systems, and to populate a server-side media content buffer 181, at a media delivery component/streaming service 152, with streams 182, 184, 186 of corresponding media content data, which can then be returned to the requesting device or to a controlled device.

In accordance with an embodiment, a plurality of client devices, media server systems, and/or controlled devices, can communicate with one another using a network, for example the Internet 190, a local area network, peer-to-peer connection, wireless or cellular network, or other form of network. For example, a user 192 can interact 194 with the user interface at a client device, and issue requests to access media content, for example the playing of a selected music or video item at their client device or at a controlled device, or the streaming of a media channel or video stream to their client device or to a controlled device.

In accordance with an embodiment, the user's selection of a particular media option can be communicated 196 to the media server, via the server's media application interface. The media server can populate its media content buffer at the server 204, with corresponding media content, 206 including one or more streams of media content data, and can then communicate 208 the selected media content to the user's client device, or to the controlled device as appropriate, where it can be buffered in a media content buffer for playing at the device.

In accordance with an embodiment, and as further described below, the system can include a server-side media gateway or access point 220, or other process or component, which operates as a load balancer in providing access to one or more servers, for use in processing requests at those servers. The system can enable communication between a client device and a server via an access point at the server, and optionally the use of one or more routers, to allow requests from the client device to be processed either at that server and/or at other servers.

For example, in a Spotify media content environment, most Spotify clients connect to various Spotify back-end processes via a gateway or access point, which forwards client requests to other servers, such as sending one or more metadataproxy requests to one of several metadataproxy machines on behalf of the client or end user.

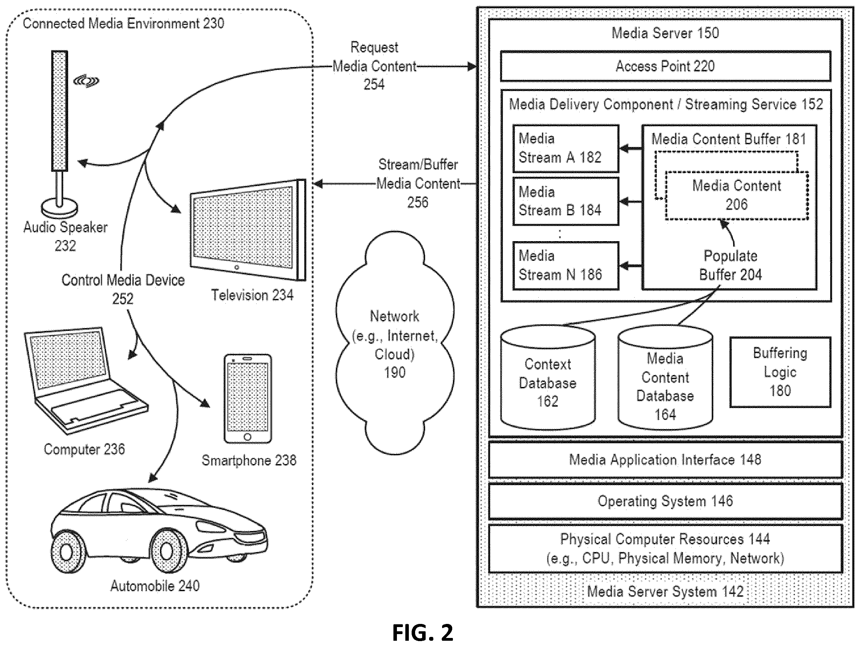

FIG. 2 further illustrates an example of a system for providing media content, which is not claimed and is presented for illustration purposes. As illustrated in FIG. 2, in accordance with an embodiment, a connected media environment 230, for example a Spotify Connect environment, enables communication between a client device and the server-side access point in a connected manner from the perspective of a user. Examples of the types of media device that can be provided within a connected media environment include audio speakers 232, televisions 234, computers 236, smartphones 238, and in-car entertainment systems 240, or other types of media device.

In accordance with an embodiment, a client device having an application user interface can act as a controlling client device, to control 252 the playback of media content at a controlled device. In accordance with an embodiment, a client device can itself act as a media gateway or access point, for use by other devices within the system for providing media content.

In accordance with an embodiment, a controlled device can also include a media application, which in the case of an audio speaker, television or similar device can be included within the device itself as firmware logic, or within, for example, a separate set-top box or similar after-market device.

As described above, in accordance with an embodiment, a user can interact with the user interface at a client device, and issue requests to access media content, for example the playing of a selected music or video item at their client device or at a controlled device, or the streaming of a media channel or video stream to their client device or to a controlled device.

For example, in accordance with an embodiment, a user can request that media content be buffered, streamed or received and played at a controlling client device such as a smartphone, and simultaneously buffered, streamed or received for playing at one or more controlled devices, such as an audio speaker. Similarly, for example, the user can issue a media-change request 254 to change a media channel, in response to which the media server can switch the media channel at the controlled device, and thereafter continue to stream or buffer media content 256 for the switched channel, at the controlled device.

As described above, in some instances, a portion of the media content can be pre-buffered at the controlled device, so that the switching to the channel at the controlled device operates in a seamless manner.

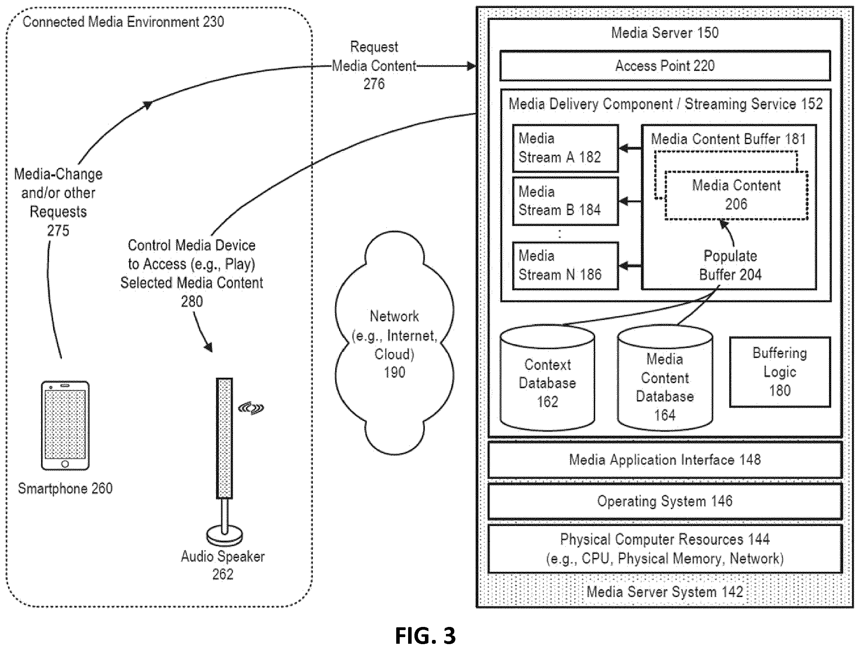

FIG. 3 further illustrates an example of a system for providing media content, which is not claimed and is presented for illustration purposes. As illustrated in FIG. 3, a user can utilize, for example, a smartphone 260 in combination with an audio speaker 262, to issue a media-change request 275 from the smartphone, for example, to change a media channel at the audio speaker. The request can be received by the media gateway or access point, and communicated to the local media server, or to other media servers, as a request for media content 276, which can then respond by controlling the destination device (in this example, the audio speaker) to access (e.g., play) the selected media content 280.

As described above, in a media content environment which supports playlists of media content items, such as songs, music, videos, or other types of media content, a user may wish to consume the same shuffled content on a range of different devices at different times. It is desirable that the shuffled order is maintained across all the devices that the user engages with. However, current arrangements for playback of shuffled content in a given order tend to require sending ordered list of media content between servers and client devices, which needs large storage capacity at both servers and client devices, and can involve large bandwidth requirements and transmission times.

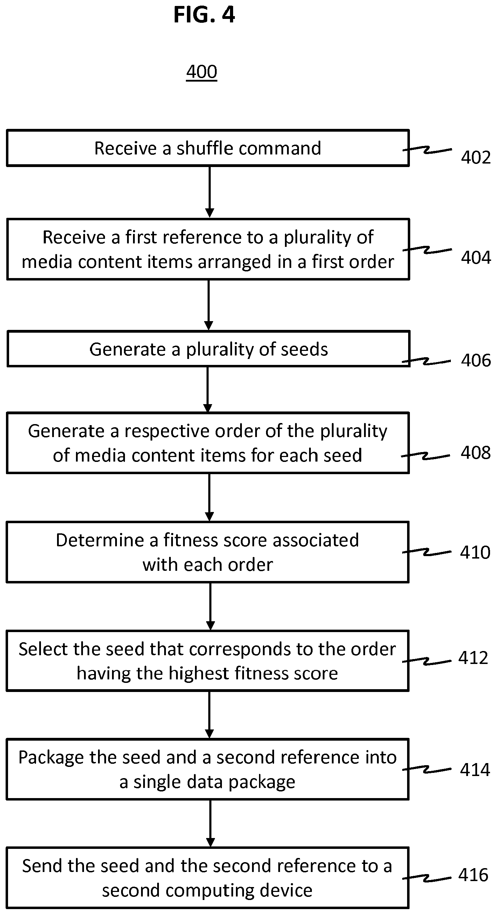

To address this, FIG. 4 shows a method 400 for communicating a defined order of a plurality of media content items which allows a shuffled list of content to be determined and shared between devices in a manner that provides efficient storage and transmission. The method is performed at a first computing device, for example the media device 102, the backend media server system 142, or any of the computing devices shown in FIGS. 1 to 3. The method 400 comprises, at step 402, receiving a shuffle command. This may be a shuffle command input by a user, for example user 192 through user interface 106. The shuffle command may indicate a wish to shuffle a particular list of media content items. Receipt of the shuffle command may trigger the start of method 400. Alternatively, the method 400 may not require a shuffle command to be input and may begin, for example, on start-up of an app, or selection of an artist or playlist.

At step 404, a first reference to a plurality of media content items arranged in a first order is received. If a shuffle command is received in step 402, the reference may be included in the shuffle command. In other embodiments, the first computing device may determine which media content is comprised in the plurality of media content items the user desires to shuffle. This could be, for example, a playlist, an album, or a list a list of media content items grouped by a particular characteristic such as artist or genre. The first order may be sorted alphabetically, by date, by track number, or by any other suitable sorting criteria known in the art.

In some embodiments, the first reference to the plurality of media content items is a Uniform Resource Locator (URL). As known in the art, a URL is a reference to a location on a computer network. In some embodiments, the location is a location where the list of the plurality of media content items arranged in the first order can be retrieved. This can, for example, be the media content database 164. The URL may include protocol and query information indicating how to access the location, and host information path information indicating the specific location. A URL is a simple text string that allows information to be located and/or accessed without complex, data heavy instructions.

As discussed above, the list that can be located using the first reference is an ordered collection of the plurality of media content items. Each media content item may be represented by a Uniform Resource Identifier (URI) and Unique Identifier (UID). The URI identifies a specific media content item, which can be, for example, a music track, a video track or a podcast episode. The UID uniquely identifies a media content item within the list, which can be important when a media content item appears multiple times in a list. In some embodiments, the data structure used for the list is JSON, but could just as well be another data serialisation format such as, but not limited to, a Google Protobuf object or XML.

Once the plurality of media content items has been identified, the list should be shuffled, as indicated in some examples by the shuffle request input by the user 192. This is achieved by using a shuffle algorithm that takes a plurality of media content items in a first order and shuffles them into a second order. In particular, the second order that is generated depends on a seed that is input to the shuffle algorithm. If the same seed and the same plurality of media content items are input to the shuffle algorithm, then the output will always be the same. Equally, in most cases, a different seed will produce a different second order. Whilst, in theory, different seeds could generate the same shuffled order (for example, if the list of media content items is very short), for lists of media content with more than a few items, the likelihood of this is very low. This provides a simple and efficient way for a shuffled order to be recreated, as to do so, a device only requires the shuffle algorithm and the relevant seed and media content.

In some embodiments, the shuffle algorithm is based on an underlying pseudo-random number generator (PRNG) algorithm, which needs an initial value, or seed, to further produce pseudo random numbers, as known in the art. In other embodiments, a hash value is generated for each media content item, based on the UID of the media content item. The list of media content items is then sorted based on the generated hash values and the seed. This enables a more stable shuffle, where media content items can be added or removed without the generated shuffle being dramatically altered. Any added (or removed) media content items will just appear (or disappear) at some place in the shuffled list, and the rest of the items remain in the same shuffled place.

Returning to FIG. 4, step 406 comprises generating a plurality of different seeds for the shuffle algorithm. Each seed may be a random number, for example generated by a PRNG as discussed above. Alternatively, the seeds may be generated in a systematic manner, for example by increasing the previous seed by a predetermined increment. Each seed that is generated is a candidate seed for later selection, once the most suitable reordering has been determined, as explained in relation to steps 408 to 412.

At step 408, a respective order of the plurality of media content items is generated for each seed using the shuffle algorithm. As discussed above, each different seed will produce a different second order for the plurality of media content items. As such, the number of different second orders for the plurality of media content items will correspond to the number of seeds generated a step 406.

At step 410, a fitness score is determined for each of the second orders determined in step 408. A fitness score of a particular second order represents its suitability for eventual selection, and is a value that can be compared to other fitness scores, for example an integer or a floating point value. The suitability of the order can be indicated by a fitness score being high or low, dependent on the parameters used to determine the fitness score.

The determination of fitness scores may be based on operational parameters relating to the second order. This allows differentiation between the different second orders in terms of, for example, storage requirements, transmission efficiency, and other parameters relating to operation of a device implementing the shuffle. In this way, the most efficient second order may be selected for further use. In some embodiments, the fitness score of a particular order is determined based on a single operation parameter. In one example, the number of media content items towards the start of the second order that have already been cached or downloaded at the first computing device or an eventual playback device may be used. In this case, if the first, say, ten media content items have already been cached or downloaded at the first computing device, immediate playback of the plurality of media content items in the second order can begin regardless of the network connection of the first computing device, and less content would have to be downloaded as it is unlikely that the user will play the whole list. This would result in a high fitness score for that particular order of media content items. In some embodiments, the fitness score may be based on properties of the media content items. For example, a fitness score may be based on the even spread of songs by the same artist, or on the listening history of the user (where recently played media content items being towards the end of the order improves the score)."

In other embodiments, a fitness score of a particular order is determined based on a number of operation parameters, for example as a weighted sum of multiple fitness scores. This may give a better overall view of how a particular second order will perform in terms of efficient operation of a device. In one example, a composite fitness score may be determined, which combines the even spread of songs by the same artist and the listening history of the user into a single score that strikes a balance between providing a good spread and not putting too many recently played media content items towards the start of the list.

Returning to FIG. 4, step 412 comprises selecting the seed that corresponds to the second order having the best fitness score. In some embodiments, this is achieved by comparing the fitness scores of each of the second orders generated at step 408, and maintaining the seed corresponding to the highest fitness score. In this way, the most efficient second order may be selected for further use. Steps 406 to 410 are then iterated, for example thousands of times, whilst maintaining the seed with the highest fitness score at each iteration. This can ensure that as many different seeds as practically possible can be tested and the best of those selected for further use. In other embodiments, only a single iteration is performed, which may reduce the computing resources required to select a seed in comparison to using an iterative approach. In some embodiments, it may be a lowest fitness score that indicates best performance, as discussed above.

It will be appreciated that steps 406 to 412 represent just one way of determining a seed for a shuffle algorithm. In other embodiments, a single seed may be generated at random, for example using a PRNG as discussed above, rather than testing many seeds. In some embodiments, a threshold fitness score could be used such that, once a seed is generated that meets the threshold, no further seeds or iterations are necessary. In some embodiments, a seed may be requested from a remote device. Each of these approaches may reduce the computational requirements of the first computing device performing the method 400 when selecting a seed.

Once a seed has been determined, the user can begin playback of the shuffled list from the first computing device, either directly from the device itself, or via an external playback device, such as by using a smartphone 260 in combination with an audio speaker 262 as described in relation to FIG. 3. The seed may be stored in a memory of the first computing device along with the shuffled list that it produces. For example, if the first computing device is the media device 102, the seed and the shuffled list may be stored in physical device hardware resources 104. Alternatively, the user may not start playback using the first device, and may merely store the seed in the memory or send it to another device, as discussed in relation to step 416.

As discussed above, a user may wish to continue a playback session, or start a playback session afresh, on a different device other than the first computing device. For example, the user may wish to stop listening on an audio speaker 232 and continue listening on a television 234, a computer 326, a smartphone 238 or an in-car entertainment system 240, as shown in FIG. 2. In this case, the second order of the plurality of media content items should be available on the next device that the user wishes to use for playback. To achieve this, rather than sending the shuffled list of media content items from the first computing device to a second computing device, the first computing device may simply send the seed that was used to generate the second order, and a reference to the list of media content items to be shuffled. By sending only a seed and a reference, rather than larger amounts of data such as a full ordered list of media content items, bandwidth requirements and transmission times over the network may be reduced. As discussed above, the shuffle algorithm will produce the same second order when the same seed and list of media contents are input. Therefore, this is all the information that a second computing device with access to the shuffle algorithm needs to regenerate the second order for the plurality of media content items.

The second reference may be similar to the first reference, in that it points to a location where an identifier for each of the plurality of media content items is stored. The second reference may also be a URL, as discussed above. The first and second reference could be the same, or different, as long as they both point to the same plurality of media content items.

To further reduce storage and transmission requirements, the seed and the second reference to the plurality of media content items may optionally be packaged into a single data package at step 414. The single data package may have a smaller file size than the combination of the individual seed and second reference. As such, the size of the data that is stored and/or transmitted to regenerate the second order may be reduced. In some embodiments, the single data package is a Google Protobuf object, although it will be envisaged that other data formats can be used.

Returning to FIG. 4, at step 416, the seed and the second reference to the plurality of media content items are sent to a second computing device. This may be done via network 190, shown in FIGS. 1 to 3. The second computing device may be a server system, such as the backend media server system 142 shown in FIG. 1, or may be a client device, such as the audio speaker 232, television 234, computer 326, smartphone 238 or in-car entertainment system 240 shown in FIG. 2. As discussed above, the seed and the second reference may be sent in a single data package. Alternatively, the seed and the second reference could be sent at the same time as separate entities, or could be sent at separate times.

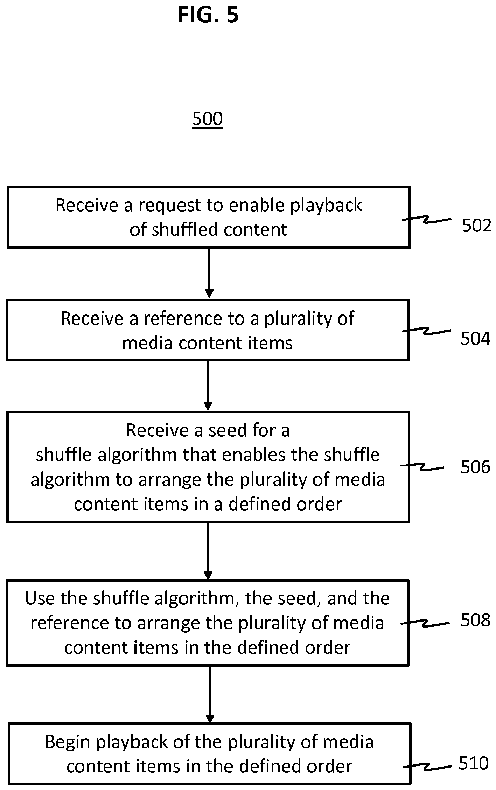

If the second computing device is a client device, it may be configured to arrange the plurality of media content items in the second order by using the shuffle algorithm, the seed and the second reference for immediate playback. For example, the client device may have the shuffle algorithm installed such that it can use the received seed and reference to regenerate the media content in the second order. This will explained in more detail with reference to FIG. 5. The seed and the second reference may be also stored in a memory of the client device for later use. For example, the seed and the second reference may be stored in physical device hardware resource 104 of media device 102. Alternatively, the second computing device may be a server, and the seed and the second reference may be stored in a memory of the server for later retrieval by a client device. For example, the seed and the second reference may be stored in physical computer hardware resource 144 of media server system 142. In some embodiments, the first computing device may send the seed and the reference to both a server and a client device.

As discussed above, by sending and/or storing only a seed and a reference, rather than larger amounts of data such as a full ordered list of media content items, memory and bandwidth requirements, as well as transmission times, may be reduced. By using a URL as a first and/or second reference, information regarding a plurality of media content items can be located and/or accessed without complex, data heavy instructions. Packaging the seed and the reference to the plurality of media content items into a single data package allows further reduction of storage and transmission requirements.

In embodiments where the user wishes to continue an already started playback session on a different device, the current playback position in the second order may also be sent from the first computing device to the second computing device. The current playback position may be included in a single package with the seed and the first reference, for example in a Google Protobuf object as discussed above. Alternatively, the current playback position may be sent at the same time as the seed and the reference, although as separate entities. Alternatively, the seed, the second reference and the current playback position could be sent at separate times. It will be envisaged that any combination of the different types of information could be sent at the same or different times.

If the second computing device is a client device, it may be configured to arrange the plurality of media content items in the second order by using the shuffle algorithm, the seed and the second reference and begin playback from the current playback position. Alternatively, the seed, the second reference and the current playback position may be stored in a memory of the client device for later use. Alternatively, if the second computing device is a server, the current playback position may be stored in context database 162, as discussed in relation to FIG. 1. In some embodiments, the current playback position may be sent to the server periodically, such that the latest state is available in cases that the device causing playback goes offline, for example due to power down or loss of network connection lost, and has no opportunity to send the current playback position as part of a controlled process.

Other information could also be sent between the first and second computing devices, and the disclosure is not limited to sending only those data items discussed above. For example, if the list of media content items are sorted and/or filtered in some way before the shuffle is performed, the relevant filtering and sorting parameters, indicating how the list was sorted and filtered, may also be sent.

As discussed above, if the second computing device is a client device with the shuffle algorithm installed, the client device may arrange the plurality of media content items in the second order by using the shuffle algorithm, the seed and the second reference. FIG. 5 shows a method 500 for enabling playback of a plurality of media content items in a defined order performed at a client device. As discussed above, the client device may be the audio speaker 232, television 234, computer 326, smartphone 238 or in-car entertainment system 240 shown in FIG. 2, although other client devices will be readily envisaged by the skilled person.

At step 502, the client device receives a request to enable playback of a plurality of media content items in a defined order. This may be a request input by a user, for example user 192 to the client device, for example through user interface 106. The request may initially be input by a user to another client device, and sent to the current client device, for example if a playback session is to be transferred between devices. The request may indicate a wish continue playback of a previous playback session, or to begin a playback session afresh. Receipt of the request may trigger the start of method 500. Alternatively, the method 500 may begin automatically, for example, on start-up of an app, or selection of an artist or playlist.

At step 504, the client device receives a reference to the plurality of media content items. This is analogous to the second reference discussed in relation to Fig. 4, and may point to a location where an identifier for each of the plurality of media content items is stored. The reference may be a URL, as discussed above. If a request is received in step 502, the reference may be included in the request. In other embodiments, the client device may determine which media content is comprised in the plurality of media content items the user desires to play back.

At step 506, the client device receives a seed for a shuffle algorithm that enables the shuffle algorithm to arrange the plurality of media content items in a defined order. As long as the seed and the plurality of media content items are the same as used to generate the seed, the shuffle algorithm will produce the plurality of media content items in the required order. As discussed in relation to Fig. 4, the seed and the second reference to the plurality of media content items may be received in a single data package for example a Google Protobuf object, or may be received at the same time as separate entities, or received at separate times.

At step 508, the client device uses the shuffle algorithm, the seed, and the reference to arrange the plurality of media content items in the defined order. This can be done by applying the seed and the reference to the shuffle algorithm such that the shuffle algorithm arranges the plurality of media content items in the defined order. In this way, the client device is enabled to cause playback of the plurality of media content items in the defined order.

The client device may also receive a current playback position in the defined order, such that the client device is enabled to cause playback of the plurality of media content items from the current playback position in the defined order. The client device may also receive other information, such as filtering and sorting parameters, as discussed above.

At step 510, the client device causes playback of the shuffled content. Playback can be caused at the client device itself, for example if the client device is an audio speaker, or the client device is a television, computer, smartphone, in-car entertainment system or other client device having a built-in speaker. Alternatively, playback can be controlled by the client device and caused at an external loudspeaker, such as by using a smartphone 260 in combination with an audio speaker 262 as described in relation to FIG. 3.

The methods discussed above allow media content to be shuffled and shared without the need to send and/or store large amounts of data such as a full ordered list of media content items. By using only a seed and a reference to media content, memory and bandwidth requirements, as well as transmission times, may be reduced. By using a URL as a first and/or second reference, information regarding a plurality of media content items can be located and/or accessed without complex, data heavy instructions. Packaging the seed and the reference to the plurality of media content items into a single data package allows further reduction of storage and transmission requirements.

Furthermore, determining the best seed to use based on operational parameters allows the most efficient shuffle order to be selected. This is achieved by differentiating candidate seeds based on, for example, storage requirements, transmission efficiency, and other parameters relating to operation of a device implementing the shuffle. The seed selection process can be iterated, for example thousands of times, which ensure that as many different seeds as practically possible can be tested and the best of those selected for further use.

Embodiments of the present invention may be conveniently implemented using one or more conventional general purpose or specialized digital computer, computing device, server, mainframe computing device, or microprocessor, including one or more processors, memory and/or computer readable storage media programmed according to the teachings of the present disclosure. Appropriate software coding can readily be prepared by skilled programmers based on the teachings of the present disclosure, as will be apparent to those skilled in the software art.

In some embodiments, the present invention includes a computer program product which is a non-transitory storage medium or computer readable medium (media) having instructions stored thereon/in which can be used to program a computer to perform any of the processes of the present invention. Examples of the storage medium can include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

For example, while the techniques described above generally illustrate exemplary uses in media content environments, or music streaming services such as Spotify, for use in providing streamed music or other media content, the systems and techniques described herein can be similarly used with other types of systems, and/or for providing other types of data.

As used herein, the terms "comprise/comprises" or "include/includes" do not exclude the presence of other elements or steps. In addition, singular references do not exclude a plurality.

## Claims

1. A method for communicating a defined order of a plurality of media content items for playback on a second computing device, the method performed at a first computing device and comprising:
receiving a first reference to a plurality of media content items for playback, said media content items being arranged in a first order;
determining a seed for a shuffle algorithm that enables the shuffle algorithm to arrange the plurality of media content items in a second order, wherein the second order is dependent on the seed; and
sending the seed, along with a second reference to the plurality of media content items, to the second computing device;
wherein the first reference and the second reference point to a location where an identifier for each of the plurality of media content items is stored.

2. The method of claim 1, wherein determining the seed comprises:
generating a plurality of seeds for the shuffle algorithm;
generating a respective order of the plurality of media content items for each seed using the shuffle algorithm;
determining a fitness score associated with each order, wherein each fitness score represents the suitability of a respective order for eventual selection and can be compared to the other fitness scores; and
selecting the seed that corresponds to the order having the best fitness score.

3. The method of claim 2, wherein each seed is a random number.

4. The method of any preceding claim, wherein the second reference comprises a uniform resource locator "URL".

5. The method of any preceding claim, further comprising packaging the second reference and the seed into a single data package before sending.

6. The method of any preceding claim, wherein the second computing device comprises a memory, the method further comprising storing the seed and the second reference in the memory for later retrieval.

7. The method of any preceding claim, further comprising:
receiving a current playback position in the second order; and
sending the current playback position along with the seed and the second reference.

8. The method of any preceding claim, wherein the first computing device comprises a client device.

9. The method of any of claims 1 to 7, wherein the first computing device comprises a server device.

10. The method of any preceding claim, wherein the second computing device comprises a server device.

11. The method of any of claims 1 to 9, wherein the second computing device comprises a client device configured to arrange the plurality of media content items in the second order by using the shuffle algorithm, the seed and the second reference, such that the client device is enabled to cause playback of the plurality of media content items in the defined order.

12. A computer-readable medium having stored thereon instructions that, when executed by one or more processors cause execution of the method of any of claims 1 to 11.

## Patentansprüche

1. Verfahren zum Kommunizieren einer definierten Reihenfolge mehrerer Medieninhaltselemente zur Wiedergabe auf einer zweiten Berechnungsvorrichtung, wobei das Verfahren in einer ersten Berechnungsvorrichtung ausgeführt wird und Folgendes umfasst:
Empfangen einer ersten Referenz auf mehrere Medieninhaltselemente zur Wiedergabe, wobei die Medieninhaltselemente in einer ersten Reihenfolge angeordnet sind;
Bestimmen eines Startwerts für einen Zufallswiedergabe-Algorithmus, der ermöglicht, dass der Zufallswiedergabe-Algorithmus die mehreren Medieninhaltselemente in einer zweiten Reihenfolge anordnet, wobei die zweite Reihenfolge von dem Startwert abhängt; und
Senden des Startwerts zusammen mit einer zweiten Referenz auf die mehreren Medieninhaltselemente zu der zweiten Berechnungsvorrichtung;
wobei die erste Referenz und die zweite Referenz auf einen Ort zeigen, wo ein Bezeichner für jedes der mehreren Medieninhaltselemente gespeichert ist.

2. Verfahren nach Anspruch 1, wobei das Bestimmen des Startwerts Folgendes umfasst:
Erzeugen mehrerer Startwerte für den Zufallswiedergabe-Algorithmus;
Erzeugen einer jeweiligen Reihenfolge der mehreren Medieninhaltselemente für jeden Startwert unter Verwendung des Zufallswiedergabe-Algorithmus;
Bestimmen einer Eignungsbewertung, die jeder Reihenfolge zugeordnet ist, wobei jede Eignungsbewertung die Eignung einer jeweiligen Reihenfolge zur endgültigen Auswahl repräsentiert und mit den anderen Eignungsbewertungen verglichen werden kann; und
Auswählen des Startwerts, der der Reihenfolge, die die beste Eignungsbewertung aufweist, entspricht.

3. Verfahren nach Anspruch 2, wobei jeder Startwert eine Zufallszahl ist.

4. Verfahren nach einem vorhergehenden Anspruch, wobei die zweite Referenz einen "Uniform Resource Locator", "URL", umfasst.

5. Verfahren nach einem vorhergehenden Anspruch, das ferner das Packen der zweiten Referenz und des Startwerts in ein einziges Datenpaket vor dem Senden umfasst.

6. Verfahren nach einem vorhergehenden Anspruch, wobei die zweite Berechnungsvorrichtung einen Speicher umfasst, wobei das Verfahren ferner das Speichern des Startwerts und der zweiten Referenz in dem Speicher für späteren Abruf umfasst.

7. Verfahren nach einem vorhergehenden Anspruch, das ferner Folgendes umfasst:
Empfangen einer aktuellen Wiedergabeposition in der zweiten Reihenfolge; und
Senden der aktuellen Wiedergabeposition zusammen mit dem Startwert und der zweiten Referenz.

8. Verfahren nach einem vorhergehenden Anspruch, wobei die erste Berechnungsvorrichtung eine Client-Vorrichtung umfasst.

9. Verfahren nach einem der Ansprüche 1 bis 7, wobei die erste Berechnungsvorrichtung eine Server-Vorrichtung umfasst.

10. Verfahren nach einem vorhergehenden Anspruch, wobei die zweite Berechnungsvorrichtung eine Server-Vorrichtung umfasst.

11. Verfahren nach einem der Ansprüche 1 bis 9, wobei die zweite Berechnungsvorrichtung eine Client-Vorrichtung umfasst, die konfiguriert ist, die mehreren Medieninhaltselemente in der zweiten Reihenfolge unter Verwendung des Zufallswiedergabe-Algorithmus, des Startwerts und der zweiten Referenz anzuordnen, so dass die Client-Vorrichtung befähigt wird, die Wiedergabe der mehreren Medieninhaltselemente in der definierten Reihenfolge zu veranlassen.

12. Computerlesbares Medium mit darauf gespeicherten Anweisungen, die dann, wenn sie durch einen oder mehrere Prozessoren ausgeführt werden, die Ausführung des Verfahrens nach einem der Ansprüche 1 bis 11 veranlassen.

## Revendications

1. Procédé de communication d'un ordre défini d'une pluralité d'éléments de contenu multimédia pour une lecture sur un second dispositif informatique, le procédé étant réalisé au niveau d'un premier dispositif informatique et comprenant :
la réception d'une première référence à une pluralité d'éléments de contenu multimédia pour une lecture, lesdits éléments de contenu multimédia étant agencés selon un premier ordre ;
la détermination d'une valeur d'initialisation pour un algorithme de mélange qui permet à l'algorithme de mélange d'agencer la pluralité d'éléments de contenu multimédia selon un second ordre, dans lequel le second ordre est dépendant de la valeur d'initialisation ; et
l'envoi de la valeur d'initialisation, conjointement avec une seconde référence à la pluralité d'éléments de contenu multimédia, au second dispositif informatique ;
dans lequel la première référence et la seconde référence pointent vers un emplacement où un identifiant pour chacun de la pluralité d'éléments de contenu multimédia est stocké.

2. Procédé selon la revendication 1, dans lequel la détermination de la valeur d'initialisation comprend :
la génération d'une pluralité de valeurs d'initialisation pour l'algorithme de mélange ;
la génération d'un ordre respectif de la pluralité d'éléments de contenu multimédia pour chaque valeur d'initialisation en utilisant l'algorithme de mélange ;
la détermination d'un score d'adéquation associé à chaque ordre, dans lequel chaque score d'adéquation représente la conformité d'un ordre respectif à une sélection éventuelle et peut être comparé aux autres scores d'adéquation ; et
la sélection de la valeur d'initialisation qui correspond à l'ordre ayant le meilleur score d'adéquation.

3. Procédé selon la revendication 2, dans lequel chaque valeur d'initialisation est un nombre aléatoire.

4. Procédé selon l'une quelconque des revendications précédentes, dans lequel la seconde référence comprend un localisateur uniforme de ressources « URL ».

5. Procédé selon l'une quelconque des revendications précédentes, comprenant en outre un empaquetage de la seconde référence et de la valeur d'initialisation dans un seul paquet de données avant l'envoi.

6. Procédé selon l'une quelconque des revendications précédentes, dans lequel le second dispositif informatique comprend une mémoire, le procédé comprenant en outre le stockage de la valeur d'initialisation et de la seconde référence dans la mémoire pour une récupération ultérieure.

7. Procédé selon l'une quelconque des revendications précédentes, comprenant en outre :
la réception d'une position de lecture actuelle selon le second ordre ; et
l'envoi de la position de lecture actuelle conjointement avec la valeur d'initialisation et la seconde référence.

8. Procédé selon l'une quelconque des revendications précédentes, dans lequel le premier dispositif informatique comprend un dispositif client.

9. Procédé selon l'une quelconque des revendications 1 à 7, dans lequel le premier dispositif informatique comprend un dispositif serveur.

10. Procédé selon l'une quelconque des revendications précédentes, dans lequel le second dispositif informatique comprend un dispositif serveur.

11. Procédé selon l'une quelconque des revendications 1 à 9, dans lequel le second dispositif informatique comprend un dispositif client configuré pour agencer la pluralité d'éléments de contenu multimédia selon le second ordre en utilisant l'algorithme de mélange, la valeur d'initialisation et la seconde référence, de sorte que le dispositif client soit autorisé à provoquer la lecture de la pluralité d'éléments de contenu multimédia selon l'ordre défini.

12. Support lisible par ordinateur sur lequel sont stockées des instructions qui, lorsqu'elles sont exécutées par un ou plusieurs processeurs, provoquent l'exécution du procédé selon l'une quelconque des revendications 1 à 11.
